# EUROPÄISCHE PATENTSCHRIFT

(11) **EP 1 193 392 B1**
(45) Veröffentlichungstag und Bekanntmachung des Hinweises auf die Patenterteilung: **09.07.2003**
(21) Anmeldenummer: 00121407.1
(22) Anmeldetag: 29.09.2000
(51) Int. Cl.: F02M 61/14, F02M 53/04, F16J 15/12

(54) **Dichtungsring für Einspritzdüsen**
Sealing ring for injector
Anneau d'étanchéité pour injecteur

(43) Veröffentlichungstag der Anmeldung: 03.04.2002
(73) Patentinhaber: Ford Global Technologies, Inc., A subsidiary of Ford Motor Company, Dearborn, Michigan 48126 (US)
(72) Erfinder: Bertram, Ulrich, 50129 Bergheim (DE); Ruhland, Helmut Hans, 52249 Eschweiler (DE)
(74) Vertreter: Drömer, Hans-Carsten, Dipl.-Ing.

(56) Entgegenhaltungen:
- PATENT ABSTRACTS OF JAPAN vol. 1998, no. 14, 31. Dezember 1998 (1998-12-31) & JP 10 252609 A (YAMAHA MOTOR CO LTD), 22. September 1998 (1998-09-22)
- PATENT ABSTRACTS OF JAPAN vol. 013, no. 213 (E-759), 18. Mai 1989 (1989-05-18) & JP 01 025610 A (MURATA MFG CO LTD), 27. Januar 1989 (1989-01-27)

## Beschreibung

Die Erfindung betrifft einen Dichtungsring gemäß dem Oberbegriff des Patentanspruches 1.

Insbesondere bei direkteinspritzenden Verbrennungsmotoren ist zwischen Einspritzdüse und Zylinderblock eine hohe Wärmeleitung notwendig, um die Temperatur der Einspritzdüse möglichst gering zu halten. Bei niederen Temperaturen der Einspritzdüse ist die Verkokung der Spitzen der Einspritzdüsen, die vor allem bei hohen Temperaturen der Spitzen auftritt, stark verringert.

Aus der JP10252609 ist ein Dichtungsring bekannt, der eine hohe Wärmeleitung zwischen Zylinderkopf und Einspritzdüse bewirkt. Dazu ist der aus Kupfer ausgeführte Dichtungsring nahe an der Spitze der Einspritzdüse zwischen Einspritzdüse und Zylinderkopf angeordnet. Gegenüber der normalen Einspritzdüsendichtung, die weiter zum Ende der Einspritzdüse hin angeordnet ist, verkürzt sich der Weg der Temperaturleitung und die Wärme wird besser von der Spitze der Einspritzdüse abgeführt. Der Wärmeleitfähigkeit ist mit dieser Anordnung immer noch beschränkt, da die Wärme zuerst über den Schaft der Einspritzdüse und dann über die begrenzte Fläche des Dichtungsringes in den Zylinderkopf abgeführt wird.

In der JP10252610 wird eine Wärmeleitkappe beschrieben, die zwischen Einspritzdüse und Zylinderkopf angeordnet ist. Durch die nunmehr große Kontaktfläche zwischen Zylinderkopf und Einspritzdüse über die aus einem gut wärmeleitenden Material bestehenden Wärmeleitkappe ist eine ausreichende Wärmeabfuhr von der Spitze der Einspritzdüse gewährleistet. Allerdings ist dieses Konzept aufwendig, da ein aufwendiges Bauteil, d. h. die Wärmeleitkappe, zusätzlich gebraucht wird.

Aufgabe der vorgestellten Erfindung ist es demnach, einen Dichtungsring dahin zu ändern, daß die Wärmeübertragung von der Spitze der Einspritzdüse in den Zylinderkopf weiter gegenüber dem bekannten Stand der Technik verbessert wird, ohne daß eine zusätzliches, aufwendiges Bauteil benötigt wird.

Gelöst wird diese Aufgabe mit den kennzeichnenden Merkmalen des Anspruches 1.

Indem der Dichtungsring eine Füllmasse aufweist, welche bei der Montage der Einspritzdüse in den Zylinderkopf durch den Anpreßdruck, der zwischen Flansch der Einspritzdüse und Absatz des Zylinderkopfes auf den Dichtungskörper wirkt, freigegeben wird und in den Verbindungsbereich der Bauteile fließt, wird der Spalt zwischen dem Schaft der Einspritzdüse und der Bohrung für die Einspritzdüse im Zylinderblock im Bereich des Dichtungsringes vollständig mit der Füllmasse ausgefüllt. In der bevorzugten Ausführung der Erfindung ist diese Füllmasse eine Wärmeleitpaste. Damit wird im gesamten Bereich, wohin diese Wärmeleitpaste geflossen ist und eine direkte Verbindung zwischen Zylinderkopf schafft, eine großflächige Wärmebrücke zwischen Einspritzdüse und Zylinderkopf geschaffen und dadurch die Wärmeleitfähigkeit gegenüber dem einfachen Dichtungsring aus Kupfer entscheidend erhöht.

In einer vorteilhaften Ausführung weist der Dichtungskörper einen Hohlquerschnitt auf, wobei der Hohlquerschnitt teilweise oder ganz mit der Füllmasse ausgefüllt ist und eine oder mehrere Öffnungen im Umfang des Dichtungskörpers angeordnet sind, durch die Füllmasse bei der Montage fließt. Mittels der Öffnungen wird genau festgelegt, an welchen Stellen die Füllmasse am Dichtungsring bei der Montage austritt und welche Bereiche zwischen Einspritzdüse und Zylinderkopf damit ausgefüllt werden. Dabei können die Öffnungen gleichmäßig oder ungleichmäßig am Umfang verteilt sein. Weiterhin können die Öffnungen die Füllmasse in Richtung des Verbrennungsraumes oder in die entgegengesetzte Richtung lenken. Ebenso kann die Füllmasse mehr zur Einspritzdüse oder mehr zum Zylinderkopf hin austreten.

Eine vorteilhafte Ausführung sieht vor, daß der Dichtungskörper im Umfang des Dichtungsringes eine Öffnung aufweist, die als Ringspalt ausgebildet ist. Bei der Montage tritt die Füllmasse sehr gleichmäßig am Umfang aus. Je nach Lage des Ringspaltes füllt die Füllmasse eher die Zwischenräume zwischen Einspritzdüse und Zylinderkopf zum Verbrennungsraum hin oder in die entgegengesetzte Richtung hin aus.

Bei einer weiteren Ausführungsform weist der Dichtungskörper zwei oder mehr Öffnungen auf, die regelmäßig im Umfang des Dichtungsringes angeordnet sind und die Öffnungsrichtung der Öffnungen am Dichtungskörper in Richtung der abzudichtenden Bereiche zeigen. Bei entsprechender Anordnung des Dichtungsringes können damit gezielt Bereiche mit der Füllmasse gefüllt werden.

Die Füllmasse kann auch eine Dichtungsmasse sein, die zu Dichtungszwecken in die Zwischenräume zwischen Zylinderkopf und Einspritzdüsen eingebracht wird. Abhängig von der Ausgestaltung und den Anforderungen an die Dichtung kann dabei die Dichtungsmasse nicht-aushärtend oder aushärtend sein.

Weiterhin kann die Füllmasse eine aushärtenderer Strukturkleber sein, der z. B. zur Sicherung der Verschraubung der Einspritzdüse benötigt wird.

Es versteht sich von selbst, daß die Anwendung des erfindungsgemäßen Dichtungsringes nicht auf die Verschraubung von Einspritzdüsen in Zylinderköpfen beschränkt ist. Jeder Dichtungsring und auch anders geformte Dichtungen, die für zusätzliche Funktionen der Wärmeleitung, der Abdichtung und/oder der Verklebung gemeinsam mit einer Wärmeleitpaste, einer Dichtungsmasse und/oder einem Strukturkleber montiert werden, können die erfindungsgemäßen Merkmale des Dichtungsringes aufweisen.

Weitere vorteilhafte Ausgestaltungen gehen aus den folgenden Abbildungen hervor. Es zeigen:
- Fig. 1: die Anordnung des Dichtungsringes im Zylinderkopf;
- Fig. 2: einen Dichtungsring vor der Montage;
- Fig. 3: einen Dichtungsring mit obenliegendem Ringspalt nach der Montage;
- Fig. 4: einen Dichtungsring mit untenliegendem Ringspalt nach der Montage; und
- Fig. 5: einen Dichtungsring mit obenliegenden und untenliegenden Öffnungen nach der Montage.

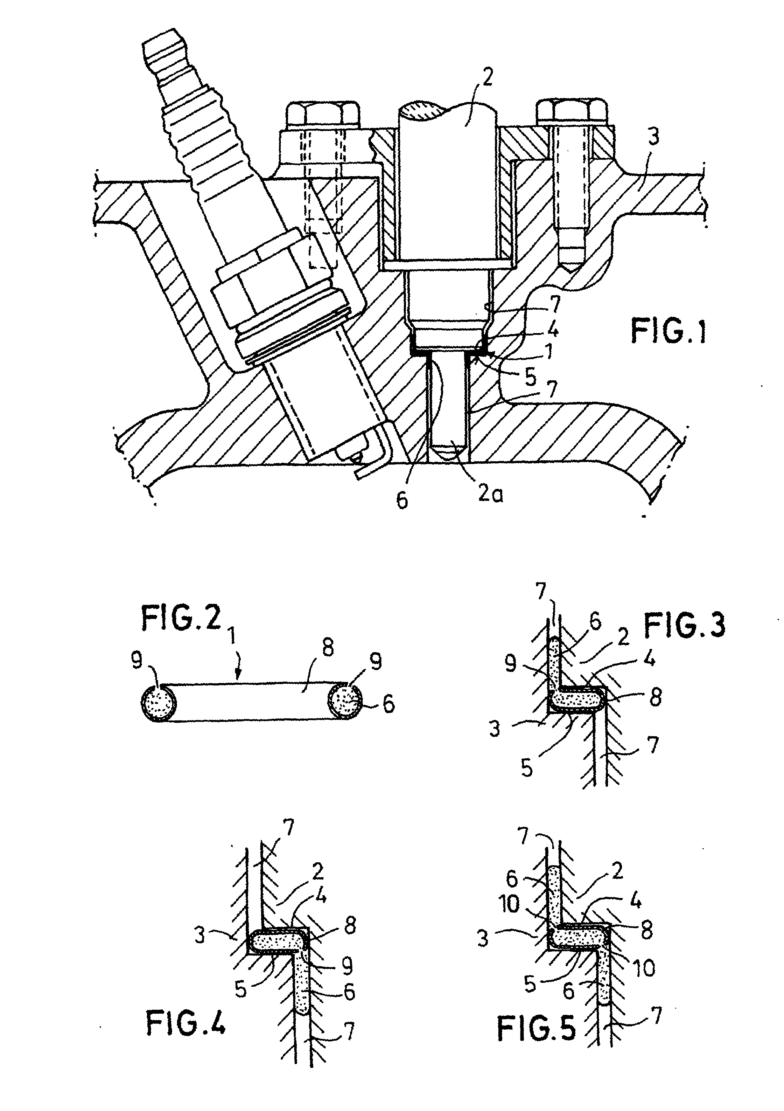

In Figur 1 ist die Anordnung des Dichtungsringes 1 zwischen Einspritzdüse 2 und Zylinderkopf 3 gezeigt. Die Einspritzdüse 2 weist einen Dichtungsflansch 4 und der Zylinderkopf 3 weist eine Dichtfläche 5 auf, zwischen denen der Dichtungsring 1 bei der Montage gepreßt wird. Dabei fließt die Wärmeleitpaste 6 in die Spalte 7 zwischen Einspritzdüse 2 und Zylinderkopf 3. Es entsteht dabei eine wesentlich größere Wärmeübertragungsfläche zwischen Einspritzdüse 2 und Zylinderkopf 3 verglichen mit einem Dichtungsring ohne Wärmeleitpaste. Je nach Menge der im Dichtungsring 1 enthaltenen Wärmeleitpaste 6 werden die Spalte 7 bis zur Spitze 2a der Einspritzdüse 2 mit Wärmeleitpaste gefüllt, wodurch eine optimale Wärmeübertragung direkt von der Spitze 2a in den Zylinderkopf 3 gewährleistet ist.

In Figur 2 ist der Dichtungsring 1 vor der Montage gezeigt. Die Wärmeleitpaste 6 füllt den gesamten Innenraum des kreisringförmigen Dichtungskörpers 8 aus. Der Dichtungskörper 8 weist einen umlaufenden Ringspalt 9 auf, durch den die Wärmeleitpaste 6 bei der Montage kontrolliert austritt.

Figur 3 zeigt die den Dichtungsring 1 in einer Einbaulage mit obenliegendem Ringspalt 9. Entsprechend fließt die Wärmeleitpaste 6 vorwiegend in die über dem Dichtungsring 1 liegenden Spalte 7.

In Figur 4 ist der Dichtungsring 1 mit untenliegendem Ringspalt 9 gezeigt. Hier fließt die Wärmeleitpaste 6 überwiegend in die unter dem Dichtungsring 1 liegenden Spalte 7.

Schließlich ist in Bild 5 ein Dichtungsring 1 gezeigt, der viele, gleichmäßig am Umfang verteilte Öffnungen 10 aufweist. Hier fließt die Wärmeleitpaste 6 in die über- und unterhalb des Dichtungsringes 1 liegenden Spalte 7.

## Patentansprüche

1. Dichtungsring (1) mit einem ein- oder mehrteiligen tragenden Dichtungskörper (8), vor allem für Einspritzdüsen (2) von Verbrennungsmotoren, wobei die Einspritzdüsen (2) in einem Zylinderkopf (3) eingeschraubt sind und der Dichtungsring (1) zwischen einer Einspritzdüse (2) und dem Zylinderkopf (3) angeordnet ist,
**dadurch gekennzeichnet, daß**
der Dichtungsring (1) eine Füllmasse (6) aufweist, welche bei der Montage zwischen einer Einspritzdüse (2) und einem Zylinderkopf (3) durch den Anpreßdruck, der zwischen einem Dichtungsflansch (4) der Einspritzdüse (2) und einer Dichtungsfläche (5) des Zylinderkopfes auf den Dichtungskörper wirkt, freigegeben wird und in die Spalte (7) im Verbindungsbereich zwischen Einspritzdüse (2) und Zylinderkopf (3) fließt.

2. Dichtungsring nach Anspruch 1,
**dadurch gekennzeichnet, daß**
der Dichtungskörper (8) einen Hohlquerschnitt aufweist, der Hohlquerschnitt teilweise oder ganz mit der Füllmasse (6) ausgefüllt ist und eine oder mehrere Öffnungen (9,10) im Umfang des Dichtungskörpers angeordnet sind, durch die Füllmasse bei der Montage fließt.

3. Dichtungsring nach Anspruch 2,
**dadurch gekennzeichnet, daß**
der Dichtungskörper (8) im Umfang des Dichtungsringes (1) eine Öffnung aufweist, die als Ringspalt (9) ausgebildet ist.

4. Dichtungsring nach Anspruch 2,
**dadurch gekennzeichnet, daß**
der Dichtungskörper (8) zwei oder mehr Öffnungen (10) aufweist, die regelmäßig im Umfang des Dichtungsringes angeordnet sind und die Öffnungsrichtung der Öffnungen am Dichtungskörper in Richtung der abzudichtenden Bereiche zeigen.

5. Dichtungsring nach Anspruch 1,
**dadurch gekennzeichnet, daß**
die Füllmasse (6) eine wärmeleitende Paste ist.

6. Dichtungsring nach Anspruch 1,
**dadurch gekennzeichnet, daß**
die Füllmasse (6) eine nichtaushärtende Dichtungsmasse ist.

7. Dichtungsring nach Anspruch 1,
**dadurch gekennzeichnet, daß**
die Füllmasse (6) eine aushärtende Dichtungsmasse ist.

8. Dichtungsring nach Anspruch 1,
**dadurch gekennzeichnet, daß**
die Füllmasse (6) ein aushärtender Strukturkleber ist.

## Claims

1. Sealing ring (1) with a single-part or multi-part supporting seal element (8), in particular for injectors (2) of internal combustion engines, the injectors (2) being screwed into a cylinder head (3) and the sealing ring (1) being arranged between an injector (2) and the cylinder head (3), **characterized in that** the sealing ring (1) has a filling composition (6), which is released during assembly between an injector (2) and a cylinder head (3) by the applied pressure which acts on the seal element between a sealing flange (4) of the injector (2) and a sealing face (5) of the cylinder head, and flows into the gap (7) in the connecting region between the injector (2) and the cylinder head (3).

2. Sealing ring according to Claim 1, **characterized in that** the seal element (8) has a hollow cross section, the hollow cross section is partly or completely filled with the filling composition (6) and one or more openings (9, 10) through which the filling composition flows during assembly are arranged in the circumference of the seal element.

3. Sealing ring according to Claim 2, **characterized in that** the seal element (8) has in the circumference of the sealing ring (1) an opening which is formed as an annular gap (9).

4. Sealing ring according to Claim 2, **characterized in that** the seal element (8) has two or more openings (10), which are arranged regularly in the circumference of the sealing ring and the opening direction of the openings on the seal element points in the direction of the regions to be sealed.

5. Sealing ring according to Claim 1, **characterized in that** the filling composition (6) is a heat-conducting paste.

6. Sealing ring according to Claim 1, **characterized in that** the filling composition (6) is a non-curing sealing composition.

7. Sealing ring according to Claim 1, **characterized in that** the filling composition (6) is a curing sealing composition.

8. Sealing ring according to Claim 1, **characterized in that** the filling composition (6) is a curing structural adhesive.

## Revendications

1. Bague d'étanchéité (1) dotée d'un corps d'étanchéité et de support (8) en une ou plusieurs pièces, principalement pour des gicleurs d'injection (2) de moteurs à combustion interne, les gicleurs d'injection (2) étant vissés dans une tête de cylindre (3) et la bague d'étanchéité (2) étant disposée entre un gicleur d'injection (2) et la tête de cylindre (3), **caractérisée en ce que** la bague d'étanchéité (1) présente un mastic de remplissage (6) qui, lors du montage, est libéré entre un gicleur d'injection (2) et une tête de cylindre (3) par la pression qui agit sur le corps d'étanchéité entre une bride d'étanchéité (4) du gicleur d'injection (2) et une surface d'étanchéité (5) de la tête de cylindre, et qui s'écoule dans l'interstice (7) situé dans la région de la liaison entre le gicleur d'injection (2) et la tête de cylindre (3).

2. Bague d'étanchéité selon la revendication 1, **caractérisée en ce que** le corps d'étanchéité (8) présente une section transversale creuse, la section transversale creuse étant remplie partiellement ou complètement par le mastic de remplissage (6) et une ou plusieurs ouvertures (9, 10) par lesquelles le mastic de remplissage s'écoule lors du montage étant disposées à la périphérie du corps d'étanchéité.

3. Bague d'étanchéité selon la revendication 2, **caractérisée en ce qu'**à la périphérie de la bague d'étanchéité (1), le corps d'étanchéité (8) présente une ouverture configurée en forme d'interstice annulaire (9).

4. Bague d'étanchéité selon la revendication 2, **caractérisée en ce que** le corps d'étanchéité (8) présente deux ou plusieurs ouvertures (10) qui sont disposées régulièrement à la périphérie de la bague d'étanchéité, l'orientation des ouvertures ménagées sur le corps d'étanchéité étant dirigée vers les régions dont l'étanchéité doit être assurée.

5. Bague d'étanchéité selon la revendication 1, **caractérisée en ce que** le mastic de remplissage (6) est une pâte thermiquement conductrice.

6. Bague d'étanchéité selon la revendication 1, **caractérisée en ce que** le mastic de remplissage (6) est une pâte d'étanchéité non durcissable.

7. Bague d'étanchéité selon la revendication 1, **caractérisée en ce que** le mastic de remplissage (6) est une pâte d'étanchéité durcissable.

8. Bague d'étanchéité selon la revendication 1, **caractérisée en ce que** le mastic de remplissage (6) est une colle de montage durcissable.
